# EUROPÄISCHE PATENTSCHRIFT

(11) **EP 0 855 139 B1**
(45) Veröffentlichungstag und Bekanntmachung des Hinweises auf die Patenterteilung: **06.02.2002**
(21) Anmeldenummer: 97120242.9
(22) Anmeldetag: 19.11.1997
(51) Int. Cl.: A22C 7/00, A23J 3/04, A23J 3/14, A23J 3/16, A23L 1/20, A23L 1/315, A23L 1/317, A23L 1/326

(54) **Verfahren zur Herstellung eines Nahrungsmittelprodukts**
Process for the preparation of a food product
Procédé de preparation d'un produit alimentaire

(30) Priorität: 22.01.1997 CA 2195739
(43) Veröffentlichungstag der Anmeldung: 29.07.1998
(73) Patentinhaber: Duve, Manfred, D-58840 Plettenberg (DE)
(72) Erfinder: Duve, Manfred, D-58840 Plettenberg (DE)
(74) Vertreter: Fritz, Edmund Lothar, Dipl.-Chem.

(56) Entgegenhaltungen:
- EP-A- 0 187 550
- EP-A- 0 624 320
- EP-A- 0 734 657
- DE-A- 2 814 295
- DE-A- 3 406 590
- US-A- 4 058 633
- US-A- 4 450 183
- ANONYMUS: "Versatile extruded food systems process 500-3000 lb/h" FOOD PROCESSING, Bd. 33, Nr. 9, September 1972, XP002082260
- PATENT ABSTRACTS OF JAPAN vol. 010, no. 128 (C-345), 13. Mai 1986 & JP 60 251853 A (TAKEYOSHI MAEDA), 12. Dezember 1985

## Beschreibung

Die vorliegende Erfindung betrifft ein Verfahren zur Herstellung eines Nahrungsmittelprodukts auf Basis von Fleisch oder Eiweißstoffen tierischen oder pflanzlichen Ursprungs. In der EP-A 0 624 320 ist bereits ein Verfahren zur Herstellung eines Nahrungsmittelprodukts auf Fleischbasis beschrieben, das als fertiges Produkt vorzugsweise die Form stäbchenartiger Streifen, Würfel oder dergleichen hat und somit vorzugsweise etwa das Aussehen von Pommes Frites hat, dabei aber nicht aus Kartoffeln sondern aus Fleischbrät hergestellt wird. Bei diesem bekannten Verfahren liegt der Nachteil darin, daß zum einen auf Grund der relativ hochwertigen Fleischanteile, die für das Ausgangsbrät verwendet werden und auf Grund des angewandten Verfahrens die Herstellung des Produkts mit zu hohen Kosten verbunden ist.

Aus der DE-A 34 06 590 ist ein Nahrungsmittelprodukt auf Basis von Fleisch- oder Eiweißstoffen tierischen oder pflanzlichen Ursprungs bekannt geworden, bei dem aus einer Ausgangszusammensetzung ein Brät hergestellt wird und bei dem die Ausgangszusammensetzung für die Herstellung des Bräts auch einen Anteil Geflügelfleisch enthalten kann. In dieser Druckschrift wird außerdem dem Nahrungsmittelprodukt auf Fleischbasis Getreide bzw. Getreidemehl zugesetzt, um ein Vollkostprodukt zu erhalten. Dabei werden Mais, Weizen, Kleie, Roggen und Hafer als Getreidesorten erwähnt. Die Verwendung von Soja als Komponente, die den pflanzlichen Eiweiß-/Fettbestandteil liefert, ist in dieser Schrift nicht vorgesehen. Der Einsatz von Carrageen wird in dieser Schrift ebenfalls nicht erwähnt.

Die Aufgabe der vorliegenden besteht darin, ein Verfahren zu schaffen, das zu einem Nahrungsmittelprodukt führt, das im Aussehen und in seinen geschmacklichen Eigenschaften demjenigen der eingangs genannten EP-A 0 624 320 ähnlich ist, das aber eine kostengünstige Herstellung des Nahrungsmittelprodukts im großen, insbesondere industriellen Maßstab zulässt. Aufgabe der vorliegenden Erfindung ist es weiterhin, ein entsprechendes Nahrungsmittelprodukt zur Verfügung zu stellen.

Die Lösung dieser Aufgabe liefert ein erfindungsgemäßes Verfahren zur Herstellung eines Nahrungsmittelprodukts mit den Merkmalen des Anspruchs 1. Das Nahrungsmittelprodukt selbst ist Gegenstand der unabhängigen Ansprüche 15 bzw. 16. Durch die Verwendung von Geflügelfleisch lässt sich dieses Nahrungsmittelprodukt fettarm und bekömmlich herstellen. Durch die Verwendung von Soja bzw. Carrageen, welches den pflanzlichen Eiweiß-/Fettbestandteil liefert, lässt sich das erfindungsgemäße Nahrungsmittelprodukt preisgünstig industriell herstellen.

Ein erfindungsgemäßer Gedanke liegt darin, als Ausgangsbestandteile für das Nahrungsmittelprodukt weniger hochwertige Fleischanteile bzw. andere Eiweißstoffe tierischer oder pflanzlicher Herkunft zu verwenden. Weiter wird im Rahmen der vorliegenden Erfindung das Verfahren so ausgeführt, daß es sich für eine rationelle, industrielle Fertigung im großen Maßstab eignet.

Die oben genannten stäbchenartigen Streifen müssen nicht rechteckig im Querschnitt sein wie herkömmliche Pommes frites, sondern können auch rund sein oder einen beliebigen anderen Querschnitt haben. Der Querschnitt und die äußere Form können auch über die Länge der Stäbchen variieren. Unregelmäßige geometrische Formen wie z.B. Spiralformen oder andere wie sie bei Nudeln bekannt sind, kommen daher ebensogut in Betracht.

Als weniger hochwertige Fleischanteile für die Ausgangsmischung im Sinne der obigen Definition kommen z. B. in Frage neben Schweinefleisch-, Rindfleisch-, Lammfleisch- oder Kalbfleischanteilen: Rinderfett, Geflügelfleisch, insbesondere Hühnerfleisch, Truthahn oder Putenfleisch, Geflügelfett, Geflügelhaut, Schweinefett, Geflügelseparatorenfleisch, Fettemulsionen bestehend aus Fett, Wasser und Bindemitteln, pflanzliche oder tierische Öle, Wildfleisch, Pferdefleisch oder Fisch.

Neben den vorgenannten Fleischrohstoffen oder Fleischersatzstoffen können als Eiweißanteile tierische oder pflanzliche Fremdeiweiße in pulverisierter oder flüssiger Form verwendet werden. Weiterhin können verwendet werden, Algenproteine, z.B. Carrageen. Daneben kommen als Inhaltsstoffe für die Ausgangsmischung bei dem erfindungsgemäßen Verfahren Getreideprodukte vor, beispielsweise Reis, Mais, Soja oder andere Getreidesorten in Pulver- oder Granulatform. Weiterhin können hinzugesetzt werden modifizierte Stärken, Bindemittel oder Füllstoffe, die in den jeweiligen Vertriebsländern lebensmittelrechtlich zugelassen sind.

Als weitere Zusatzstoffe oder Hilfsstoffe die entweder der Ausgangsmischung zugesetzt oder im Laufe des Verfahrens beigemischt werden können, kommen beispielsweise in Betracht, Phosphate, Citrate, Acetate, Zuckerstoffe, modifizierte Stärken, Konservierungsmittel, Bindemittel und andere Hilfsstoffe oder Füllstoffe, die in den jeweiligen Vertriebsländern lebensmittelrechtlich zugelassen sind. Ebenfalls zugesetzt werden in der Regel Salz und/oder Gewürzstoffe und/oder Geschmacksstoffe. Die Anteile der jeweiligen Fleischanteile, sonstigen Eiweißstoffe, Zusätze oder Hilfsstoffe der obengenannten Art können innerhalb weiter Bereiche variieren je nach Geschmacksrichtung und gewünschten sonstigen Eigenschaften des Endprodukts.

Bei dem erfindungsgemäßen Verfahren wird zunächst aus der Ausgangsmischung mit den obengenannten Bestandteilen ein Brät oder eine bindige Masse mit feinem oder mehr oder weniger grobem Charakter in einem ersten Verfahrensschritt hergestellt. Dazu können verschiedene für die Herstellung eines solchen Bräts oder einer bindigen Masse im Prinzip bekannte Methoden oder Vorrichtungen verwendet werden. Beispielsweise kann man einen sogenannten Kutter verwenden, der in der Fleischverarbeitung häufig zum Einsatz kommt. Das Kuttern kann z.B. mit Eis oder auch mit Zugabe von CO₂ und Wasser erfolgen. Alternativ kommt die Verwendung einer Kolloidmühle, eines sogenannten Schneidmischers oder anderer Meng- oder Mischvorrichtungen in Betracht, die die Bestandteile der Ausgangsmischung mischen und das Eigeneiweiß aufschließen.

Das so hergestellte Brät wird gemäß einer Variante der Erfindung mittels eines Vakuumfüllers oder einer Transportschnecke oder einer Feststoffpumpe durch ein Füllhorn gedrückt. Dieses Horn bzw. der Auslaß verbreitert sich und hat z.B. ein oder mehrere eckige oder runde Auslässe. Das Brät wird durch dieses Füllhorn in einem Strang bzw. mit einer gleichmäßigen Geschwindigkeit auf ein Förderband gedrückt und wird vorzugsweise in einer Art Tunnel durch den das Förderband läuft mit Hilfe von Heizluft gegart. Alternativ dazu kann das Brät auch auf einem Förderband in ein Wasserbad laufen und dort beispielsweise bei einer Temperatur zwischen etwa 70° und etwa 80° Celsius im Wasserbad gebrüht werden. Nach dem Garvorgang mit Hilfe der Heißluft oder aber im Wasserbad wird das streifenförmige Brät, daß sich vorzugsweise weiter auf einem Förderband befindet mit Hilfe einer Schneidvorrichtung, z. B. einem Guillotinemesser auf die gewünschte Länge geschnitten. Danach läuft das Förderband vorzugsweise in einen Kühltunnel, in dem das Brät, das dann bereits die endgültige Pommes Frites ähnliche Form hat, tiefgefroren wird, z. B. mit Hilfe von flüssigem Stickstoff, der aus entsprechenden Düsen in diesen Kühltunnel austritt.

Nach dem obengenannten Brühen im Wasserbad kann man das Produkt z.B. auch in heißes Fett führen und dort frittieren.

Gemäß einer Alternative des erfindungsgemäßen Verfahrens kann man auch das Brät durch ein Füllhorn drücken, das eine solche Form hat, daß das Brät in einem breiten flachen Strang, von beispielsweise 60 - 80 cm Breite austritt. Dieses Brät gelangt dann in den breiten flachen Strang auf eine erhitzte, vorzugsweise beschichtete sich drehende Walze und wird dort gleichmäßig verteilt. Je nach dicke des ankommenden Bräts wird die Rotation der Walze beschleunigt oder verlangsamt. Dadurch wird das Brät gleichmäßig gegart, auf der Oberfläche der Walze. Nachdem das Brät die Garstrecke auf der Walze zurückgelegt hat wird es mittels eines Abstreifers auf ein Transportband abgelegt. Dort wird das Brät abgekühlt z.B. in einem Kühltunnel oder durch Stickstoffbegasung. Danach läßt man die abgekühlte Masse gegen schrägstehende, stehende oder sich bewegende Messer laufen, so daß man endlose Streifen des Bräts erhält. Diese ständig weitertransportierten Streifen werden dann mit einem Guillotinemesser, das heißt z.B. einem sich auf das Transportband absenkenden Balken oder einem sich absenkenden Schneiddraht auf die gewünschte Länge geschnitten, so daß man schließlich kleine Streifen des gegarten Bräts in einer Pommes Frites ähnlichen Form erhält.

Gemäß einer alternativen Variante des erfindungsgemäßen Verfahrens kann man auch zunächst das Brät in Därme füllen und in diesen Därmen brühen. Danach werden die Därme die das Brät enthalten abgekühlt, der Darm wird abgezogen (geschält) und anschließend wird das so gegarte Brät geschnitten z.B. mittels einer der vorgenannten Schneidvorrichtungen. Man kann auch einen sogenannten Allesschneider oder Speckstreifenschneider als Schneidvorrichtung verwenden.

Die Weiterverarbeitung des nach den obengenannten Verfahren hergestellten gegarten Produkts umfaßt in der Regel erfindungsgemäß das Tieffrieren z.B. in einem Gefriertunnel und das anschließende automatische portionierte Verpacken in Behältnisse geeigneter Art z.B. Beutel aus Kunststoff oder dergleichen. Diese Art der Weiterverarbeitung und Verpackung eignet sich, wenn das Produkt für den Fast-Food-Verzehr bzw. für Anwender in der Gastronomie gedacht ist. Dort wird das Produkt vor der Anwendung in der Regel in einer Friteuse fritiert.

Wenn das erfindungsgemäße Fleischprodukt für den Verbrauch beim Endkunden also in Privathaushalten bestimmt ist, kann dieses entweder ebenfalls tiefgefroren und verpackt z.B. vakuumverpackt in den Handel gelangen und der Verbraucher kann dieses in einer Friteuse fritieren.

Alternativ dazu kann aber auch die Oberfläche des Produkts nach dem Garvorgang und nach dem Abkühlen mit Zuckerstoffen besprüht werden, um so später eine gleichmäßige Bräunung zu erhalten. Danach kann das Produkt wiederum tiefgefroren und portionsweise verpackt z.B. in Beuteln in den Handel gelangen. Der Endverbraucher kann alternativ zu dem vorgenannten fritieren ein solches Produkt im Heißluftofen erhitzen oder z.B. in einem Mikrowellenofen oder in einer Pfanne garen.

Gemäß einer Variante der Erfindung kann man auch das Produkt vor oder nach dem Garen zusätzlich panieren oder mit einem anderen Überzug versehen.

Nachfolgend wird die vorliegende Erfindung anhand von Ausführungsbeispielen unter Bezug auf die beiliegenden Zeichnungen näher beschrieben.

### Beispiel 1:

In einem ersten Schritt wird ein vorzugsweise relativ feines Brät hergestellt. Dabei geht man für einen Ansatz von z. B. 100 Kilogramm Brät von den nachfolgend aufgeführten Bestandteilen aus, um ein Brät auf Basis von Geflügelfleisch herzustellen:

| | |
|---|---|
| 40 kg | Geflügelfleisch |
| 20 kg | Geflügelhaut |
| 15 kg | Eis |
| 10 kg | Sojamehl |
| 10 kg | Geflügel-Separatorenfleisch |
| 5 kg | Salz, Gewürze, Kutterhilfsmittel und sonstige Zusatzstoffe |

Die Herstellung des Bräts auf Basis von Geflügelfleisch erfolgt vorzugsweise mit Hilfe eines in der Fleischereitechnik üblichen Kutters. Bevor man die Bestandteile in den Kutter gibt, empfiehlt es sich, die Fleischbestandteile z. B. in einem Fleischwolf vorzuzerkleinern. Eis wird in Form von zerstoßenem Eis oder Schnee zugegeben. Die Geflügelhaut wird ebenfalls vorzugsweise vorzerkleinert.

Zur Herstellung des feinen Bräts gibt man die Bestandteile entweder vollständig oder portionsweise nach und nach in einen Kutter, wobei man während des Kuttervorgangs immer wieder portionsweise Eis zugibt und dabei die Temperatur in der Brätmasse kontrolliert. Durch das Aufschließen der Proteine und den Emulgiervorgang während des Kutters findet nämlich eine Erwärmung statt, die durch die Eiszugabe ausgeglichen wird. Man kontrolliert den Kuttervorgang mittels eines genauen Thermometers so, daß die Temperatur des Bräts während des Kuttervorgangs möglichst unterhalb von 10°C liegt, vorzugsweise sich im Bereich zwischen 0°C und 10°C bewegt. Der gesamte Kuttervorgang kann einige Minuten dauern je nach Art der zugegebenen Fleischanteile, abhängig von der Gesamtmenge des verarbeiteten Ansatzes an Brät, abhängig von der Größe und der Art des Kuttertyps und auch abhängig von der Rotationsgeschwindigkeit mittels derer man die Kuttermesser rotieren läßt. Das Ende des Kuttervorgangs erkennt der Fachmann an der Konsistenz des Bräts, die vorzugsweise während des Kuttervorgangs überwacht wird.

Nach Beendigung des Kuttervorgangs kann man entweder das erhaltene feine Brät in die Abfüllvorrichtung, vorzugsweise einen sogenannten Vakuumfüller mit Füllhorn geben. Man kann aber alternativ dazu auch einen Teil des Gesamtansatzes der zugegebenen Fleischanteile, z. B. einen Teil der zugegebenen 40 Kilogramm Geflügelfleisch zunächst zurückbehalten und das feine Brät mit den übrigen Bestandteilen des Ansatzes herstellen. Zum Schluß gibt man dann das restliche grob vorzerkleinerte Geflügelfleisch zu dem Brät und vermischt das Ganze, z. B. ebenfalls in einem Kutter, den man dann jedoch mit einer niedrigeren Umdrehungszahl laufen läßt, um ein Aufschließen und feines Zerkleinern des Grobbestandteils zu verhindern und lediglich eine einheitliche Mischung zu erhalten. Durch diese groben Bestandteile hat das so erhaltene Brät dann einen besseren Biß. Anschließend gibt man wiederum dieses Brät in die Abfüllvorrichtung. Die weitere Verfahrensweise ist dann wie folgt. Es wird dabei auf die beiliegenden Zeichnungen Bezug genommen und anhand dieser die weitere Verarbeitung des durch den Kuttervorgang bzw. anderweitigen Mischvorgang erhaltenen Bräts erläutert.
- Fig. 1: eine schematisch vereinfachte Ansicht eines erfindungsgemäßen Verfahrens zur Herstellung des Nahrungsmittelprodukts gemäß einer ersten Variante;
- Fig. 2: eine vergrößerte perspektivische Detailansicht der für das Verfahren gemäß Fig. 1 verwendeten Abfüllvorrichtung;
- Fig. 3: eine schematisch vereinfachte Seitenansicht eines weiteren Verfahrens zur Herstellung eines Nahrungsmittelprodukts gemäß einer Variante der Erfindung;
- Fig. 4 a-e: verschiedene beispielhafte Formen von Auslaßkanälen für eine erfindungsgemäße Abfüllvorrichtung.

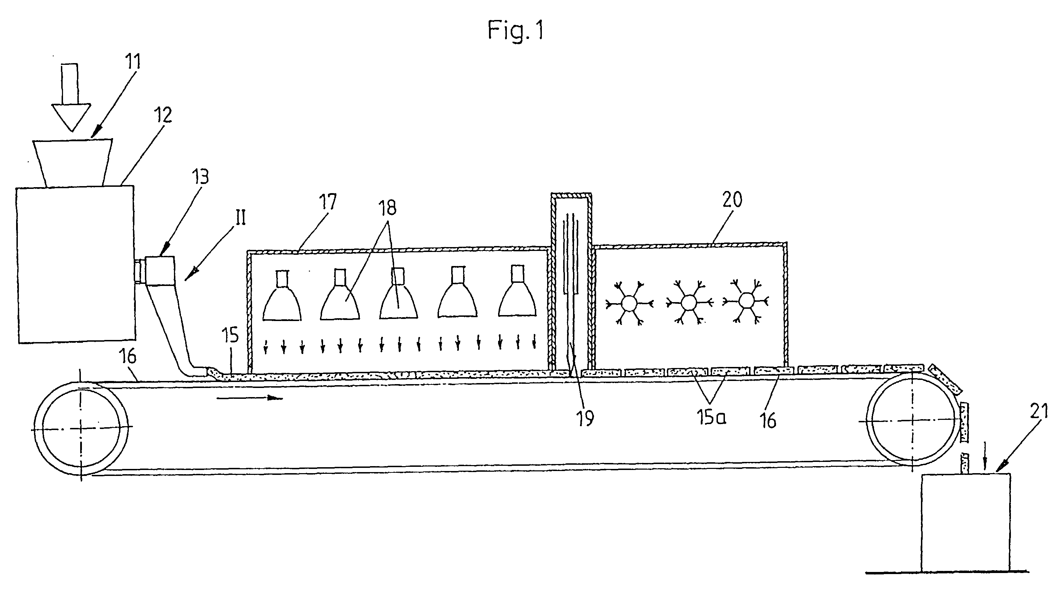

Zunächst wird auf Fig. 1 Bezug genommen.

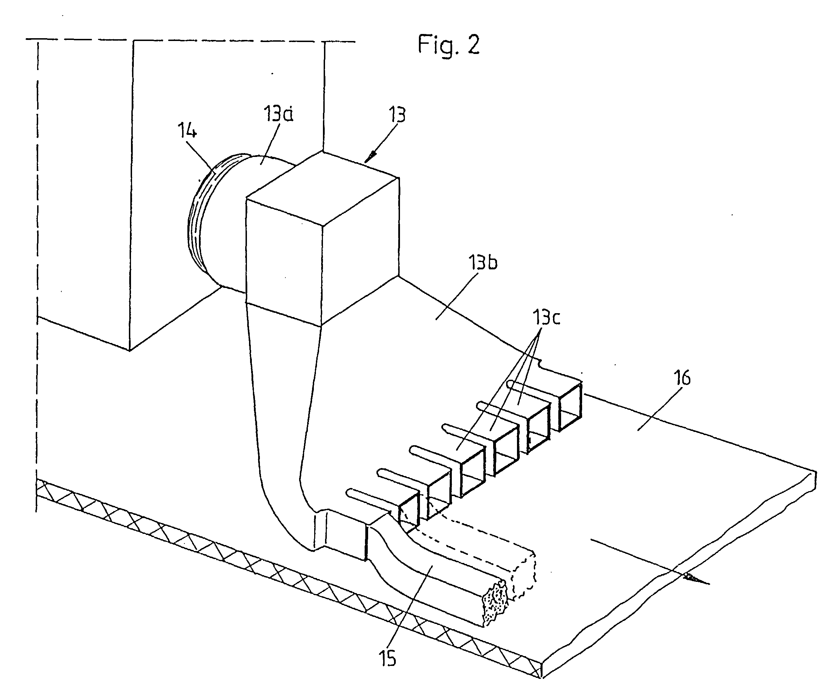

Bei dem erfindungsgemäßen Verfahren nach der Variante gemäß Fig. 1 wird das vorher durch Kuttern hergestellte Brät in Pfeilrichtung in die Einfüllöffnung 11 der Abfüllvorrichtung 12 gegeben. Die Abfüllvorrichtung 12 kann so konstruiert sein, daß im inneren das Brät aus einem Vorratsbehältnis, in das es über die Einfüllöffnung 11 gelangt, über eine Vakuumpumpe angesaugt wird und dann über einen Kanal in den Auslaß 13 gelangt. Dieser Auslaß 13 der Abfüllvorrichtung ist in Fig. 2 noch einmal im Detail perspektivisch dargestellt. Der Auslaß 13 umfaßt einen auf ein Gewinde 14 aufschraubbaren Schraubansatz 13a, so daß der Auslaß 13 bei Bedarf abgeschraubt und ausgetauscht werden kann. Im inneren des Schraubansatzes 13a gelangt das Brät durch einen rohrförmigen Stutzen in den unteren Teil 13b des Auslaßes, der sich wie man in Fig. 2 erkennt nach unten und vorn hin allmählich konisch verbreitert und endseitig in mehrere parallele beabstandete im Umriß eckige wie hier oder auch runde Kanäle 13c verzweigt. Diese Kanäle 13c sind die Auslaßkanäle, über die die einzelnen streifenförmigen Stränge des Bräts 15 den Auslaß der Abfüllvorrichtung verlassen. Die Auslaßkanäle 13c sind vorzugsweise in ihrem Endbereich etwa horizontal ausgerichtet und befinden sich relativ dicht über dem Förderband 16, so daß die Stränge des Bräts 15 kontinuierlich ohne Abzureißen auf das sich in Pfeilrichtung bewegende Förderband 16 abgelegt werden. Dabei ist weiterhin darauf zu achten, daß die Abstände der einzelnen Auslaßkanäle 13c so groß gewählt sind, daß anschließend die einzelnen parallelen Stränge 15 des Bräts mit genügendem Abstand voneinander nebeneinander abgelegt werden und nicht miteinander in Berührung gelangen, so daß sie nicht verkleben können.

Wenn man erreichen will, daß das austretende Brät bereits etwas formstabiler ist, kann man z. B. einen Endbereich der in Fig. 2 dargestellten Auslaßkanäle 13c beheizen, so daß das Eiweiß zu koagulieren beginnt.

Es wird nun nachfolgend erneut auf Fig. 1 Bezug genommen. Das in parallelen streifenförmigen Strängen 15 nebeneinander abgelegte Brät gelangt nun über das Förderband 16 in einen Tunnel 17, in dem es gegart wird. In dem Tunnel 17 befinden sich mehrere Heizluftgebläse 18, die vorzugsweise über dem Brät angeordnet sind und heiße Luft, die feucht oder trocken ist auf das Brät blasen, um dieses zu garen. Stattdessen kann man das Brät auch in einem Fett- oder Wasserbad oder auch z.B. durch Induktionswärme oder Kurzwellen- bzw. Mikrowellen-Garvorrichtungen garen.

Das Förderband 16 transportiert die Stränge 15 des Bräts weiter zu einer in Transportrichtung im Anschluß an den Tunnel 17 angeordneten Schneidvorrichtung in Form eines Guillotinemessers 19, das in senkrechter Richtung beweglich angeordnet ist und von oben nach unten her jeweils über die gesamte Breite der nebeneinanderliegenden Stränge 15 diese durchschneidet. Bei jedem Schnitt werden also alle streifenförmigen Stränge 15 des Bräts in kürzere Abschnitte durchtrennt, wobei die Länge dieser Abschnitte vorzugsweise bereits derjenigen der herzustellenden Fleischfritten aus der Brätmasse entspricht. Dies bedeutet, die Länge der Fleischfritten 15a kann innerhalb größerer Bereiche variieren, z.B. beträgt sie zwischen einigen mm und 30 cm oder mehr nach dem Schneidevorgang. Anschließend gelangt das geschnittene Brät in einen Kühltunnel 20. Dieser Kühltunnel 20 arbeitet beispielsweise so, daß flüssiger Stickstoff auf das in Fleischfritten 15a geschnittene Brät geblasen wird, so daß dieses tiefgefroren wird. Anschließend werden die tiefgefrorenen Fleischfritten 15a über das Förderband 16 aus dem Kühltunnel 20 heraustransportiert und gelangen dann vorzugsweise unmittelbar zu einer Verpackungsstation 21, deren Funktion hier nicht näher erläutert wird. In der Verpackungsstation 21 werden die Fleischfritten 15 vorzugsweise luftdicht und haltbar verpackt.

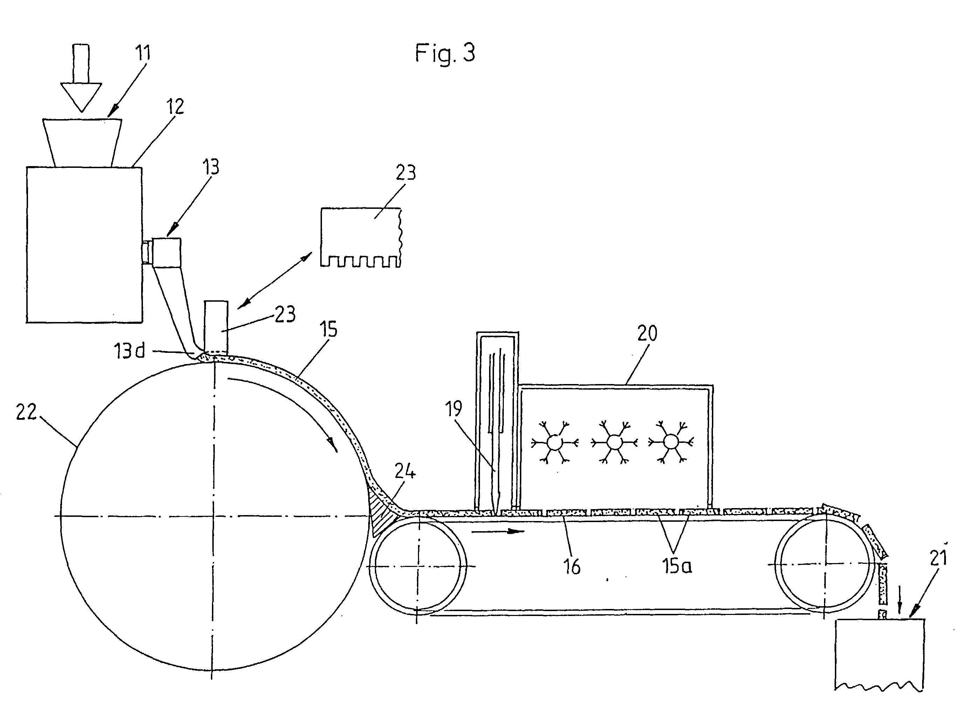

Nachfolgend wird nun unter Bezugnahme auf Fig. 3 eine alternative Variante des erfindungsgemäßen Verfahrens erläutert. In diesem Fall ist wiederum eine Abfüllvorrichtung 12 vorgesehen mit einer Einfüllöffnung 11, in die das Brät entsprechend der Abfüllvorrichtung 12 von Fig. 1 eingegeben wird. Der Auslaß 13 der Abfüllvorrichtung ist zunächst im oberen Teil ähnlich wie der in Fig. 2 dargestellte Auslaß. Jedoch sind bei dem Auslaß 13 gemäß Fig. 3 nicht die einzelnen Auslaßkanäle 13c vorgesehen, sondern der Auslaß von Fig. 3 hat endseitig an der Auslaßseite keine Verzweigung, sondern es handelt sich um einen einzigen über die Breite durchgehenden Kanal 13d, dessen Höhe und Breite ähnlich sein kann wie bei der Vorrichtung 13 gemäß Fig. 2. Diesen Auslaßkanal 13 verläßt also ein flacher breiter Strang 15 des Bräts. Dieser Strang 15 des Bräts gelangt auf die heiße Oberfläche einer rotierenden sich in der Zeichnung gemäß Fig. 3 im Uhrzeigersinn drehenden beheizbaren Walze 22, die kurz unterhalb des Auslaßes 13d angeordnet ist. Man kann entweder die Walze 22 unmittelbar beheizen oder diese von außen erwärmen, z.B. durch Bestrahlen oder Beaufschlagen mit heißem Dampf oder Heißluft.

Wie man sieht ist unmittelbar hinter dem Auslaß 13d oberhalb der Walze eine zahnkammartige Abstreifvorrichtung 23 angeordnet, die in der Vorderansicht in der Zeichnung Fig. 3 noch einmal extra dargestellt ist. Durch diese zahnkammartige Abstreifvorrichtung 23 wird der Strang 15 des Bräts in einzelne parallel nebeneinanderliegende schmale Stränge aufgetrennt, wobei die Abstreifvorrichtung 23 gleichzeitig gewährleistet, daß die Stränge 15 des Bräts eine gewisse Höhe nicht überschreiten. Auf der heißen Oberfläche der Walze 22, die sich weiter dreht und das Brät 15 transportiert, werden die einzelnen parallelen Stränge des Bräts nun gleichmäßig gegart. Nach etwa einer Viertelumdrehung auf der Walze ist der Garvorgang beendet und die parallelen einzelnen Stränge 15 des Bräts gelangen über ein Übergangsstück 24 auf ein Förderband 16. Die Stränge 15 des Bräts werden dann durch das Förderband 16 weiter in Pfeilrichtung transportiert und durchlaufen wiederum eine Schneidvorrichtung in Form eines Guillotinemessers 19 ähnlich wie in Fig. 1. Dort werden die Streifen 15a geschnitten und gelangen wiederum in den sich in Förderrichtung anschließenden Kühltunnel 20. In diesem Kühltunnel 20 werden sie wie bei den in Fig. 1 beschriebenen Verfahren mit Hilfe von flüssigem Stickstoff tiefgefroren und gelangen dann schließlich wieder zu der Verpackungsstation 21 wo sie luftdicht verpackt werden.

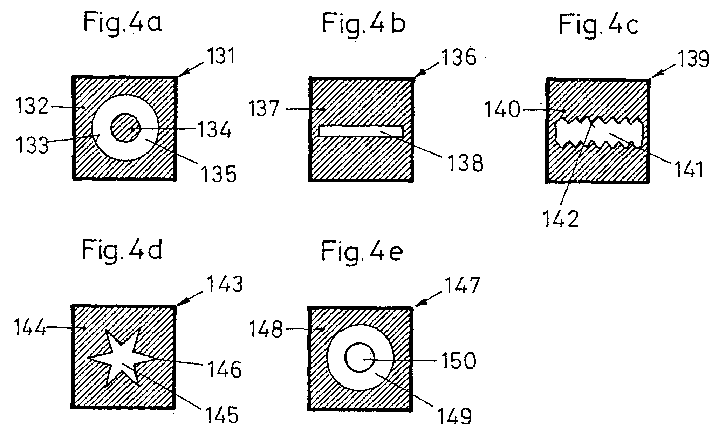

Die Figuren 4a bis 4e zeigen verschiedene beispielhafte Formen von Auslaßkanälen, die für eine erfindungsgemäße Abfüllvorrichtung geeignet sind. So zeigt zum Beispiel Fig. 4a einen hohlförmigen Auslaßkanal 131, aus dem das Brät dann in etwa zylindrischer Form austritt, ähnlich wie bei einer Nudel, zum Beispiel Makkaroni. Diese hohlzylindrische Form wird dadurch erreicht, daß der Auslaßkanal 131 eine äußere Gehäusewandung 132 hat mit einer Innenwand 133, die das Äußere des Bräts formt und einem konzentrisch angeordneten Dorn 134, wobei zwischen dem Dorn 134 und der Innenwand 133 ein ringförmiger Raum 135 angeordnet ist, durch den das Brät hindurchtritt und der die Form des Produkts bestimmt.

Nachfolgend wird auf Fig. 4b Bezug genommen und anhand dieser eine weitere Variante eines Auslaßkanals 136 beschrieben. Hier hat der Auslaßkanal 136 einen äußeren Umriß beispielsweise eine rechteckige Gehäusewandung 137 und einen darin liegenden ebenfalls etwa rechteckigen vorzugsweise flachen Hohlraum 138, aus dem das Brät austritt und das Produkt geformt wird. Durch diese flache rechteckige Form wird eine flache bandartige Streifenform des Produkts ähnlich wie bei einer Bandnudel erzielt.

Ein weiteres Ausführungsbeispiel zeigt Fig. 4c. Dort hat der Auslaßkanal 139 wiederum eine Gehäusewand 140 mit einer innenliegenden Formhöhlung 141, wobei hier die Wandung 142 der Formhöhlung gezackt ist, so daß das aus dem Auslaßkanal 139 austretende Produkt in seiner äußeren Kontur entsprechend gezackt ist.

Ein weiteres Ausführungsbeispiel zeigt Fig. 4d. Dort hat der Auslaßkanal 143 wiederum eine Gehäusewand 144 mit einer Innenform 145, wobei diese Innenform 145 eine sternförmig ausgebildete Wandung 146 hat, so daß sich ein sternförmiger Formenhohlraum ergibt und das austretende Produkt ebenfalls einen sternförmigen Querschnitt aufweist.

Fig. 4e zeigt eine weitere alternative Variante eines Auslaßkanals für eine erfindungsgemäße Abfüllvorrichtung. Der Auslaßkanal 147 weist wiederum ein rechteckiges Gehäuse 148 auf, innerhalb dessen sich als Form ein ringförmiger Hohlraum 149 befindet, der mit dem Brät gefüllt wird. Konzentrisch innerhalb dieses ringförmigen Hohlraums 149 liegt ein weiterer innerer rohrförmiger Auslaß 150, innerhalb dessen sich eine zweite eßbare Masse befindet, beispielsweise Käse. Bei Verwendung eines derartigen Auslaßkanals 147 kann man ein erfindungsgemäßes Produkt herstellen, das im äußeren Bereich aus einer ringförmigen Masse auf Fleischbasis besteht, die eine innere Füllung zum Beispiel auf Käsebasis enthält.

### Beispiel 2:

In einem ersten Schritt wird wiederum ein feines Brät auf Basis von Geflügelfleisch hergestellt. Dabei geht man für einen Ansatz von 100 Kilogramm Brät von den nachfolgend aufgeführten Bestandteilen aus:

| | |
|---|---|
| 65 kg | Geflügelfleisch |
| 15 kg | Geflügelhaut |
| 15 kg | Eis |
| 5 kg | Salz, Gewürze, Kutterhilfsmittel und andere Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 3:

In einem ersten Schritt wird ein feines Brät auf Basis von Geflügelfleisch hergestellt. Dabei geht man für einen Ansatz von 100 Kilogramm Brät von den nachfolgend aufgeführten Bestandteilen aus:

| | |
|---|---|
| 60 kg | Geflügelfleisch |
| 15 kg | Schweinefett |
| 15 kg | Eis |
| 5 kg | Carrageen |
| 5 kg | Gewürze, Salz, Kutterhilfsmittel und andere Zusatzstoffe |

Die Herstellung des Bräts mittels des Kutters erfolgt wiederum in der gleichen Weise wie oben bei Beispiel 1 beschrieben wurde. Die anschließende Weiterverarbeitung des Bräts nach dem Kuttervorgang erfolgt ebenfalls gemäß einem der im Anschluß an Beispiel 1 unter Bezugnahme auf die beiliegenden Zeichnungen näher beschriebenen Verfahren.

### Beispiel 4:

Nachfolgend wird die Herstellung eines Bräts beschrieben, das sich von den unter den Beispielen 1 bis 3 genannten Nahrungsmittelprodukten dadurch unterscheidet, daß als Hauptkomponente an Stelle von Geflügelfleisch jetzt Wildfleisch eingesetzt wird. Als solches Wildfleisch kommt im Prinzip beliebiges Wildfleisch in Betracht, je nachdem welche Geschmackskomponente bevorzugt ist. Bevorzugt wird solches Wildfleisch eingesetzt, das jeweils besonders preisgünstig erhältlich ist. Nur beispielhaft seien genannt Fleisch vom Rentier, Reh, Hasen, Wildschwein, Hirsch etc..
Für einen Ansatz von 100 Kilogramm Brät geht man aus von den nachfolgend aufgeführten Bestandteilen:

| | |
|---|---|
| 70 kg | Wildfleisch |
| 15 kg | Eis |
| 10 kg | Schweinefett |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 5:

In einem ersten Schritt wird ein Brät hergestellt auf Basis einer Mischung aus Schweinefleisch und Wildfleisch.

Dabei geht man für einen Ansatz von 100 Kilogramm Brät von den nachfolgend aufgeführten Bestandteilen aus:

| | |
|---|---|
| 30 kg | Schweinefleisch |
| 20 kg | Wildfleisch |
| 15 kg | Eis |
| 15 kg | pflanzliches Fett (Pflanzenöl) |
| 10 kg | Milcheiweiß |
| 5 kg | Bindemittel |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 6:

In einem ersten Schritt wird ein Brät hergestellt, das sich in diesem Fall jedoch von den vorbeschriebenen Nahrungsmittelprodukten gemäß den Beispielen 1 bis 5 dadurch unterscheidet, daß hier die Hauptkomponente für das Brät Fischfleisch ist. Dabei kommt für dieses Fischfleisch praktisch beliebiges verfügbares Fleisch von unterschiedlichen Körperpartien bekannter Speisefische in Betracht. Man geht dabei für einen Ansatz von 100 Kilogramm Brät aus von den nachfolgend aufgeführten Bestandteilen:

| | |
|---|---|
| 60 kg | Fischfleisch |
| 20 kg | pflanzliches Fett (Pflanzenöl) |
| 10 kg | Eis |
| 5 kg | Bindemittel |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 7:

Nachfolgend wird ähnlich wie in Beispiel 6 ein Nahrungsmittelprodukt hergestellt, das als Hauptkomponente Fischfleisch enthält, wobei jedoch der Fischanteil höher ist als in Beispiel 6 und dafür der Anteil an pflanzlichem Fett entfällt. Für einen Ansatz von 100 Kilogramm Brät geht man von den nachfolgend aufgeführten Bestandteilen aus:

| | |
|---|---|
| 80 kg | Fischfleisch |
| 10 kg | Eis |
| 5 kg | Sojaeiweiß |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 8:

In diesem Beispiel wird ein Nahrungsmittelprodukt hergestellt, das eine entsprechende Weiterverarbeitung erfährt wie in den vorherigen Beispielen, das sich aber gegenüber diesen dadurch unterscheidet, daß die sonst verwendete Hauptkomponente Fleisch oder Fisch, die den Eiweißbestandteil des Bräts bildet, ersetzt wird durch Sojamehl als Eiweißträger. Dabei geht man für einen Ansatz von 100 Kilogramm aus von den nachfolgend aufgeführten Bestandteilen:

| | |
|---|---|
| 70 kg | Sojamehl |
| 20 kg | Wasser |
| 5 kg | Bindemittel |
| 5 kg | Salz, Gewürze, Kutterhilfsmittel und sonstige Zusatzstoffe |

Die Zugabe von Eis ist bei dieser Mischung nicht erforderlich, da die Erwärmung weniger stark ist bei der Durchmischung. Es kann daher statt dessen für die Regulierung des Wassergehalts des Nahrungsmittelprodukts unmittelbar Wasser zugegeben werden.

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 9:

In dem nachfolgenden Beispiel wird ähnlich wie in Beispiel 8 ein Nahrungsmittelprodukt hergestellt, das als Hauptkomponente Sojamehl als Eiweißspender enthält. Dabei geht man für die Herstellung einer Masse von 100 Kilogramm aus von den nachfolgend aufgeführten Bestandteilen:

| | |
|---|---|
| 50 kg | Sojamehl |
| 20 kg | pflanzliches Fett (Pflanzenöl) |
| 15 kg | Wasser |
| 10 kg | Käse |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 10:

Nachfolgend wird ein weiteres Nahrungsmittelprodukt gemäß der Erfindung beschrieben, bei dem man zur Herstellung des Bräts als Hauptkomponente Fisch verwendet. Dabei geht man für einen Ansatz von 100 Kilogramm Brät aus von den nachfolgend aufgeführten Bestandteilen:

| | |
|---|---|
| 50 kg | Fischfleisch |
| 20 kg | pflanzliches Fett (Pflanzenöl) |
| 10 kg | Bindemittel |
| 15 kg | Eis |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 11:

Nachfolgend wird ein weiteres Beispiel für ein erfindungsgemäßes Nahrungsmittelprodukt angegeben, das als Hauptkomponente für die Herstellung des Bräts Wildfleisch enthält. Dabei geht man für einen Ansatz von 100 Kilogramm Brät von den nachfolgend aufgeführten Bestandteilen aus:

| | |
|---|---|
| 40 kg | Wildfleisch |
| 20 kg | Schweinefett |
| 15 kg | Eis |
| 10 kg | Separatorenfleisch |
| 10 kg | Sojaeiweiß |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

### Beispiel 12:

Nachfolgend wird ein weiteres Beispiel für eine erfindungsgemäße Zusammensetzung eines Nahrungsmittelprodukts angegeben, wobei hier als Hauptkomponente für die Herstellung des Bräts Geflügelfleisch verwendet wird. Dabei geht man für einen Ansatz von 100 Kilogramm Brät aus von den nachfolgend aufgeführten Bestandteilen:

| | |
|---|---|
| 50 kg | Geflügelfleisch |
| 20 kg | Geflügelfett |
| 5 kg | Geflügelseparatorenfleisch |
| 5 kg | Carrageen |
| 15 kg | Eis |
| 5 kg | Salz, Gewürze, Kutterhilfsmittel und sonstige Zusatzstoffe |

Die Herstellung des Bräts erfolgt z. B. in der in Beispiel 1 geschilderten Weise. Die weitere Verarbeitung des gekutterten Bräts mittels der Abfüllvorrichtung und das anschließende Garen und Portionieren erfolgt ebenfalls in der Weise wie dies oben nach Beispiel 1 unter Bezugnahme auf die beiliegenden Zeichnungen beschrieben wurde. Der Unterschied zu Beispiel 1 liegt somit in der unterschiedlichen Zusammensetzung der Ausgangsstoffe, die für die Herstellung des Bräts verwendet werden.

Alle oben beschriebenen Nahrungsmittelprodukte gemäß der Erfindung können mit entsprechenden eßbaren Füllungen verschiedenster Art versehen werden. Weiterhin können die erfindungsgemäßen Nahrungsmittelprodukte alternativ dazu oder auch zusätzlich mit den verschiedensten eßbaren Außenbeschichtungen versehen werden, beispielsweise können sie paniert werden oder mit Käse umhüllt werden. Für die Füllungen kommen beispielsweise solche auf Basis von Käse oder Gemüse oder beliebige andere in Betracht.

## Patentansprüche

1. Verfahren zur Herstellung eines Nahrungsmittelprodukts auf Basis von Fleisch oder Eiweißstoffen tierischen oder pflanzlichen Ursprungs,
bei dem in einem ersten Arbeitsgang aus den Ausgangsstoffen durch Zerkleinerung und/oder Vermischung ein Brät hergestellt wird, in einem weiteren Schritt dieses Brät dann in eine Abfüllvorrichtung (12) gegeben wird, aus der das Brät dann in einem Strang oder mehreren parallelen Strängen (15) austritt,
**dass** dann in einem weiteren Schritt der oder die Stränge (15) des Bräts gegart werden, dass dann die gegarten Stränge (15) des Bräts durch eine Schneidvorrichtung (19) in Streifen gewünschter Länge geschnitten und danach tiefgefroren und verpackt werden, **dadurch gekennzeichnet, dass** wenigstens einer der Ausgangsbestandteile für die Herstellung des Bräts Geflügelfleisch ist und die Ausgangszusammensetzung für die Herstellung des Bräts Sojamehl oder Sojaeiweiß enthält.

2. Verfahren zur Herstellung eines Nahrungsmittelprodukts auf Basis von Fleisch oder Eiweißstoffen tierischen oder pflanzlichen Ursprungs nach Anspruch 1, **dadurch gekennzeichnet, dass** das Brät (15) in einem Tunnel (17) mit Hilfe von Heißluftgebläsen (18) oder in einem Fett- oder Wasserbad oder durch Induktionswärme oder durch Kurzwellen oder Mikrowellen gegart wird.

3. Verfahren zur Herstellung eines Nahrungsmittelprodukts auf Basis von Fleisch oder Eiweißstoffen tierischen oder pflanzlichen Ursprungs nach Anspruch 1, **dadurch gekennzeichnet, dass** das Brät nach dem Austreten aus dem Auslaß (13d) der Abfüllvorrichtung (12) auf der Oberfläche einer heißen Walze (22) abgelegt und dort gegart wird, wobei die Walze (22) entweder unmittelbar oder mittelbar von außen durch Bestrahlen oder Beaufschlagen mit heißem Dampf oder Heißluft beheizt wird.

4. Verfahren zur Herstellung eines Nahrungsmittelproduktes auf Basis von Fleisch oder Eiweißstoffen tierischen oder pflanzlichen Ursprungs nach Anspruch 1 oder 2, **dadurch gekennzeichnet, dass** das Brät (15) mittels eines Förderbands (16) durch den Tunnel (17) transportiert wird, in dem es gegart wird.

5. Verfahren zur Herstellung eines Nahrungsmittelprodukts auf Basis von Fleisch- oder Eiweißstoffen tierischen oder pflanzlichen Ursprungs nach einem der Ansprüche 1 bis 4, **dadurch gekennzeichnet, dass** das in einem Strang aus dem Auslaß (13d) der Abfüllvorrichtung (12) austretende Brät (15) durch eine zahnkammartige Abstreifvorrichtung (23) in einzelne parallele nebeneinanderliegende schmale Stränge aufgetrennt wird.

6. Verfahren zur Herstellung eines Nahrungsmittelprodukts auf Basis von Fleisch- oder Eiweißstoffen tierischen oder pflanzlichen Ursprungs nach einem der Ansprüche 1 bis 5, **dadurch gekennzeichnet, dass** das Brät durch mehrere Auslaßkanäle (13c) im Endbereich des Auslaßes der Abfüllvorrichtung in einzelne parallele Stränge (15) aufgetrennt wird.

7. Verfahren zur Herstellung eines Nahrungsmittelprodukts auf Basis von Fleisch- oder Eiweißstoffen tierischen oder pflanzlichen Ursprungs nach einem der Ansprüche 1 bis 6, **dadurch gekennzeichnet, dass** der Auslaßkanal (131, 136, 139, 143, 147) einen runden, rechteckigen, vieleckigen, gezackten oder sternförmigen Umriß hat.

8. Verfahren zur Herstellung eines Nahrungsmittelprodukts auf Basis von Fleisch- oder Eiweißstoffen tierischen oder pflanzlichen Ursprungs nach einem der Ansprüche 1 bis 7, **dadurch gekennzeichnet, dass** der Auslaßkanal hohlförmig ist mit einer Innenwand (133) und einem konzentrisch angeordneten Dorn (134), so dass ein ringförmiger Raum (135) entsteht.

9. Verfahren zur Herstellung eines Nahrungsmittelprodukts auf Basis von Fleisch- oder Eiweißstoffen tierischen oder pflanzlichen Ursprungs nach einem der Ansprüche 1 bis 8, **dadurch gekennzeichnet, dass** das Brät (15) mittels eines Förderbands (16) transportiert wird und über ein über dem Förderband angeordnetes vertikal bewegliches Messer (19) alle nebeneinanderliegenden Stränge (15) des Bräts in kürzere Streifen aufgetrennt werden.

10. Verfahren zur Herstellung eines Nahrungsmittelprodukts auf Basis von Fleisch- oder Eiweißstoffen tierischen oder pflanzlichen Ursprungs nach einem der Ansprüche 1 bis 9, **dadurch gekennzeichnet, dass** das Brät, das auf einem Förderband (16) abgelegt ist durch einen Kühltunnel (20) transportiert und dort vorzugsweise mit flüssigem Stickstoff tiefgefroren wird.

11. Nahrungsmittelprodukt auf Basis von Fleisch- oder Eiweißstoffen tierischen oder pflanzlichen Ursprungs, **dadurch gekennzeichnet, dass** es nach einem Verfahren gemäß einem der Ansprüche 1 bis 10 hergestellt wurde.

12. Nahrungsmittelprodukt auf Basis von Fleisch- oder Eiweißstoffen tierischen oder pflanzlichen Ursprungs nach Anspruch 11, **dadurch gekennzeichnet, dass** wenigstens einer der Ausgangsbestandteile für die Herstellung des Bräts Wildfleisch ist.

13. Nahrungsmittelprodukt auf Basis von Fleisch- oder Eiweißstoffen tierischen oder pflanzlichen Ursprungs nach Anspruch 11 oder 12, **dadurch gekennzeichnet, dass** einer der Ausgangsbestandteile für die Herstellung des Bräts Fischfleisch ist.

14. Nahrungsmittelprodukt auf Basis von Fleisch- oder Eiweißstoffen tierischen oder pflanzlichen Ursprungs nach einem der Ansprüche 11 bis 13, **dadurch gekennzeichnet, dass** einer der Ausgangsbestandteile für die Herstellung des Bräts Separatorenfleisch ist.

15. Nahrungsmittelprodukt auf Basis von Fleisch- oder Eiweißstoffen tierischen oder pflanzlichen Ursprungs, bei dem aus einer Ausgangszusammensetzung ein Brät hergestellt wird und die Ausgangszusammensetzung für die Herstellung des Bräts Geflügelfleisch und Sojaeiweiß enthält.

16. Nahrungsmittelprodukt auf Basis von Fleisch- oder Eiweißstoffen tierischen oder pflanzlichen Ursprungs, bei dem aus einer Ausgangszusammensetzung ein Brät hergestellt wird bei dem die Ausgangszusammensetzung für die Herstellung des Bräts einen Anteil Geflügelfleisch und einen Anteil Carrageen enthält.

17. Nahrungsmittelprodukt auf Basis von Fleisch- oder Eiweißstoffen tierischen oder pflanzlichen Ursprungs nach einem der Ansprüche 11 bis 16, **dadurch gekennzeichnet, dass** die Ausgangszusammensetzung zur Herstellung des Bräts einen Anteil Käse enthält.

18. Nahrungsmittelprodukt auf Basis von Fleisch- oder Eiweißstoffen tierischen oder pflanzlichen Ursprungs nach einem der Ansprüche 11 bis 17, **dadurch gekennzeichnet, dass** die Ausgangszusammensetzung zur Herstellung des Bräts als Hauptkomponente Wildfleisch und/oder Fischfleisch und/oder Geflügelfleisch und/oder Sojamehl enthält.

19. Nahrungsmittelprodukt auf Basis von Fleisch- oder Eiweißstoffen tierischen oder pflanzlichen Ursprungs nach einem der Ansprüche 11 bis 18, **dadurch gekennzeichnet, dass** dieses eine Füllung aus einer zweiten essbaren Masse, beispielsweise Käse enthält.

## Claims

1. A process for the preparation of a food product based on either meat or proteins of animal or vegetal origin, wherein a first operation step is the preparation of sausage meat by crushing and/or mixing the original substances, and wherein afterwards, in a further step, the sausage meat is given into a filling device (12), out of which the sausage meat is let out via one or several parallel strings (15), and wherein afterwards, the sausage meat is cooked within the string or strings (15), and wherein then, the cooked strings (15) with the sausage meat are cut by a cutting device (19) in stripes into a desired length, and afterwards frozen deeply and wrapped in, **characterized in that** at least one of the original components for the production of the sausage meat is poultry meat and **in that** the original composition for the preparation of the sausage meat comprises soya bean flour or soya protein.

2. A process for the preparation of a food product based on either meat or proteins of animal or vegetal origin according to Claim 1, **characterized in that** the sausage meat (15) is cooked within a tunnel (17) via a hot-air fan (18) or fat or water bath or via induction heat or by short waves or microwaves.

3. A process for the preparation of a food product based on either meat or proteins of animal or vegetal origin according to Claim 1, **characterized in that** the sausage meat is cooked after leaving the outlet (13d) of the filling device (12) on the surface of a hot roll (22), wherein the roll (22) is heated up by either directly or indirectly irradiating or charging it from outside with hot vapours or air.

4. A process for the preparation of a food product based on either meat or proteins of animal or vegetal origin according to either of Claim 1 or 2, **characterized in that** the sausage meat (15) is transported via a conveyor belt (16) through the tunnel (17), wherein it becomes cooked.

5. A process for the preparation of a food product based on either meat or proteins of animal or vegetal origin according to one of the Claims 1 to 4, **characterized in that** the sausage meat (15) leaves one of the strings through the outlet (13d) of the filling device (12) and then is divided by means of a tooth like stripping-off device (23) into single narrow strings, which are parallel and running side by side.

6. A process for the preparation of a food product based on either meat or proteins of animal or vegetal origin according to one of the Claims 1 to 5, **characterized in that** the sausage meat is let through several outlet channels (13c) in the terminal area of the outlet of the filling device and divided into single parallel strings (15).

7. A process for the preparation of a food product based on either meat or proteins of animal or vegetal origin according to one of the Claims 1 to 6, **characterized in that** the outlet channel (131, 136, 139, 143, 147) provides a round, rectangular, pentagonal, indented or star-shaped outline.

8. A process for the preparation of a food product based on either meat or proteins of animal or vegetal origin according to one of the Claims 1 to 7, **characterized in that** the outlet channel is hollow with an inner wall (133) and a concentrically arranged spine (134) so that an annular space (135) is produced.

9. A process for the preparation of a food product based on either meat or proteins of animal or vegetal origin according to one of the Claims 1 to 8, **characterized in that** the sausage meat (15) is transported via a conveyor belt (16) and all the parallel strings (15) of the sausage meat are cut into shorter stripes by means a mobile knife (19) situated above the conveyor belt.

10. A process for the preparation of a food product based on either meat or proteins of animal or vegetal origin according to one of the Claims 1 to 8, **characterized in that** the sausage meat situated upon a conveyor belt (16) is transported through a cooling tunnel (20) wherein it is preferably quick-frozen with liquid nitrogen.

11. Food product based on either meat or proteins of animal or vegetal origin, **characterized in that** it was produced according to one of the Claims 1 to 10.

12. Food product based on either meat or proteins of animal or vegetal origin according to Claim 11 **characterized in that** at least one of the original components for the preparation of the sausage meat is game.

13. Food product based on either meat or proteins of animal or vegetal origin according to one of the Claims 11 or 12 **characterized in that** one of the original components for the preparation of the sausage meat is fish meat.

14. Food product based on either meat or proteins of animal or vegetal origin according to one of the Claims 11 to 13 **characterized in that** one of the original components for the preparation of the sausage meat is mechanically separated meat.

15. Food product based on either meat or proteins of animal or vegetal origin wherein sausage meat is produced from original components and wherein the original components for the preparation of the sausage meat comprise poultry meat and soya protein.

16. Food product based on either meat or proteins of animal or vegetal origin wherein sausage meat is produced from original components and wherein the original components for the preparation of the sausage meat comprise partly poultry meat and partly carrageenan.

17. Food product based on either meat or proteins of animal or vegetal origin according to one of the Claims 11 to 16 **characterized in that** one of the original components for the preparation of the sausage meat is cheese.

18. Food product based on either meat or proteins of animal or vegetal origin according to one of the Claims 11 to 17 **characterized in that** the original components for the preparation of the sausage meat provides, as a main component, game and/or fish meat and/or poultry meat and/or soya bean flour.

19. Food product based on either meat or proteins of animal or vegetal origin according to one of the Claims 11 to 18 **characterized in that** the filling contains a second edible mass, for example cheese.

## Revendications

1. Procédé de préparation d'un produit alimentaire à base de viande ou d'albumines d'origine animale ou végétale, dans laquelle dans une première opération des matériaux initiaux sont produits moyennant broyage et/ou mélange de chair de saucisses, dans une étape ultérieure la chair à saucisses est alors disposée dans une emmouleuse (12), à partir de laquelle la chair à saucisses sort moyennant un brin ou plusieurs brins parallèles (15), et où lors d'une étape ultérieure le ou les brins (15) de la chair à saucisses sont cuisinés, alors que les brins cuisinés (15) de la chair à saucisses sont ensuite surgelés et emballés par un dispositif de coupage (19) dans des bandes de longueur désirée, **caractérisé en ce que**, que du moins un des composants de départ pour la préparation de la chair à saucisses est de la viande de volaille et la composition de départ pour la préparation de la chair à saucisses contient de la farine de soja ou de la protéine de soja.

2. Procédé de préparation d'un produit alimentaire à base de viande ou d'albumines d'origine animale ou végétale selon la revendication 1, **caractérisé en ce que,** la chair à saucisses (15) est cuisinée dans un tunnel (17) à l'aide de souffleries à air chaud (18) ou dans un bain de graisse ou d'eau ou bien en moyennant de la chaleur par induction ou par des ondes courtes ou des micro-ondes.

3. Procédé de préparation d'un produit alimentaire à base de viande ou d'albumines d'origine animale ou végétale selon la revendication 1, **caractérisé en ce que,** la chair à saucisses après franchir la sortie (13d) de l'emmouleuse (12) est déposée sur la surface d'un cylindre chaud (22) et là celle-ci est cuisinée est réchauffée, tandis que le cylindre (22) est directement ou indirectement chauffé de l'extérieur par irradiation ou moyennant alimentation avec de la vapeur chaude ou avec de l'air chaud.

4. Procédé de préparation d'un produit alimentaire à base de viande ou d'albumines d'origine animale ou végétale selon la revendication 1 ou 2, **caractérisé en ce que,** la chair à saucisses (15) est transportée moyennant une bande de convoiement (16) par le tunnel (17), où celle-ci est cuisinée.

5. Procédé de préparation d'un produit alimentaire à base de viande ou d'albumines d'origine animale ou végétale selon une des revendications de 1 à 4, **caractérisé en ce que,** la chair à saucisses agrandie (15) dans un brin de sortie (13d) de l'emmouleuse (12) est séparée par un dispositif de stripage du type de peigne à dents (23) en différents brins parallèles étroits situés les uns à côté des autres.

6. Procédé de préparation d'un produit alimentaire à base de viande ou d'albumines d'origine animale ou végétale selon une des revendications de 1 à 5, **caractérisé en ce que,** la chair à saucisses est séparée par plusieurs canaux de sortie (13c) dans la zone finale de déchargement de l'emmouleuse en différents brins parallèles (15).

7. Procédé de préparation d'un produit alimentaire à base de viande ou d'albumines d'origine animale ou végétale selon une des revendications de 1 à 6, **caractérisé en ce que**, le canal de sortie (131, 136, 139, 143, 147) présente un contour en forme de rond, rectangle, polygone, une forme dentelée ou d'étoile.

8. Procédé de préparation d'un produit alimentaire à base de viande ou d'albumines d'origine animale ou végétale selon une des revendications de 1 à 7, **caractérisé en ce que,** le canal de sortie présente un creux avec une paroi interne (133) et un mandrin disposé de façon concentrique (134) afin de créer un espace annulaire (135).

9. Procédé de préparation d'un produit alimentaire à base de viande ou d'albumines d'origine animale ou végétale selon une des revendications de 1 à 8, **caractérisé en ce que,** la chair à saucisses (15) est transportée en moyennant une bande de convoiement (16) et une lame mobile verticale, (19) disposée au-dessus de la bande de convoiement, sépare tous les brins situés les uns à côté des autres (15) de la chair à saucisses en formant des bandes plus courtes.

10. Procédé de préparation d'un produit alimentaire à base de viande ou d'albumines d'origine animale ou végétale selon une des revendications de 1 à 9, **caractérisé en ce que**, la chair à saucisses qui est déposée sur une bande de convoiement (16) est transportée par un tunnel de réfrigération (20) et là, celle-ci est préférablement surgelée avec de l'azote fluide.

11. Produit alimentaire à base de viande ou d'albumines d'origine animale ou végétale, **caractérisé en ce que,** il a été produit suivant un procédé selon une des revendications de 1 à 10.

12. Produit alimentaire à base de matériaux de viande ou albumine d'origine animale ou végétale selon la revendication 11, **caractérisé en ce que,** du moins un des composants de départ pour la préparation de la chair à saucisses est de la viande de gibier.

13. Produit alimentaire à base de viande ou d'albumines d'origine animale ou végétale selon la revendication 11 ou 12, **caractérisé en ce que,** un des composants de départ pour la préparation de la chair à saucisses est de la viande de poisson.

14. Produit alimentaire à base de viande ou d'albumines d'origine animale ou végétale selon une des revendications de 11 à 13, **caractérisé en ce que,** un des composants de départ pour la préparation de la chair à saucisses est de la viande séparée mécaniquement.

15. Produit alimentaire à base de viande ou d'albumine d'origine animale ou végétale, **caractérisé en ce que** la chair à saucisses est produite à partir d'une composition de départ laquelle contient de la viande de volaille et de la protéine de soja pour la préparation de la chair à saucisses.

16. Produit alimentaire à base de viande ou d'albumines d'origine animale ou végétale **caractérisé en ce que** la chair à saucisses est produite avec une composition de départ laquelle contient un pourcentage de viande de volaille et un pourcentage de carragheen pour la préparation de la chair à saucisses.

17. Produit alimentaire à base de viande ou d'albumines d'origine animale ou végétale selon une des revendications de 11 à 16, **caractérisé en ce que,** la composition de départ pour la préparation de la chair à saucisses contient un pourcentage de fromage.

18. Produit alimentaire à base de viande ou d'albumines d'origine animale ou végétale selon une des revendications de 11à 17, **caractérisé en ce que,** la composition de départ pour la préparation de la chair à saucisses comme composant principal contient de la viande de gibier et/ou de la viande de poisson et/ou de la viande de volaille et/ou de la farine de soja.

19. Produit alimentaire à base de viande ou d'albumines d'origine animale ou végétale selon une des revendications de 11 à 18, **caractérisé en ce que**, celui-ci contient un fourrage d'une deuxième quantité mangeable, par exemple du fromage.
